(19) Europäisches Patentamt

European Patent Office

Office européen des brevets

(11) Veröffentlichungsnummer: **0 469 466 A2**

# EUROPÄISCHE PATENTANMELDUNG

(21) Anmeldenummer: **91112483.2**

(22) Anmeldetag: **25.07.91**

(51) Int. Cl.5: **B29C 47/82**, B29C 45/74

(30) Priorität: **28.07.90 DE 4024070**

(43) Veröffentlichungstag der Anmeldung:
**05.02.92 Patentblatt 92/06**

(84) Benannte Vertragsstaaten:
**AT BE CH ES FR GB LI NL SE**

(71) Anmelder: **Krauss-Maffei Aktiengesellschaft**
**Krauss-Maffei-Strasse 2**
**W-8000 München 50(DE)**

(72) Erfinder: **Brams, Peter, Ing. grad.**
**Waldmeisterstrasse 44a**
**W-8000 München 45(DE)**

(54) **Einrichtung zum Plastifizieren von thermoplastischen Kunststoffen.**

(57) Um eine Plastifizierschnecke, insbesondere für Extruder, so zu beheizen, daß das zu verarbeitende Material unter Verwendung von relativ kurzen Schnecken und Schneckenzylindern kurzfristig und gleichmäßig erwärmt werden kann, erfolgt die Beheizung mittels Hochfrequenz. Vorteilhaft sind der Schneckenkern als Innen- und der Schneckenzylinder als Außenelektrode ausgebildet, wobei zwischen den Elektroden ein Isolator angeordnet ist.

Fig. 1

Die Erfindung bezieht sich auf eine Einrichtung zum Plastifizieren von thermoplastischen Kunststoffen gemäß dem Oberbegriff des Patentanspruchs 1.

Um das der Schnecke zugeführte Kunststoffmaterial aufzuschmelzen, ist es bekannt, den Schneckenzylinder mittels elektrischer Widerstandsheizbänder zu beheizen. Nach der DE-OS 35 40 024 ist es z.B. auch bekannt, den Zylinder mit achsparallel angeordneten Temperierkanälen zu versehen, die stirnseitig verschlossen und durch querliegend angeordnete Sammelkanäle verbunden sind.

Da Kunststoffe im allgemeinen schlechte Wärmeleiter sind, benötigt man eine große Kontaktfläche, um die Spritzmasse kurzfristig und gleichmäßig zu erwärmen. Hierzu verwendet man verhältnismäßig lange Schnecken und Schneckenzylinder, die jedoch in der Regel sehr teuer sind, eine hohe Antriebsleistung benötigen und einem hohen Verschleiß unterliegen. Außerdem können Abrieb bei transparenten Teilen, Lärmentwicklung und örtlich unkontrollierte Überhitzung durch Scherwirkung auftreten.

Der Erfindung liegt die Aufgabe zugrunde, eine Plastifizierschnecke der eingangs bezeichneten Art so zu beheizen, daß das Kunststoffmaterial unter Verwendung von relativ kurzen Schnecken und Schneckenzylindern kurzfristig und gleichmäßig erwärmt werden kann.

Diese Aufgabe wird dadurch gelöst, daß die Beheizung der Plastifiziereinrichtung mittels Hochfrequenz erfolgt.

In vorteilhafter Ausbildung der Erfindung wird durch den als Innenelektrode ausgebildeten Schneckenkern und den als Außenelektrode dienenden Schneckenzylinder mit einem dazwischen angeordneten Isolator beispielsweise ein hoher Strom von ca. 100 KVA mit einer hohen Frequenz von 27,12 MHz geschickt, wobei ein hohes Hochfrequenzfeld entsteht. Dieses Hochfrequenzfeld wird nur wenige Sekunden, und zwar vom Plastifizierbeginn bis zum Plastifizierende, aufgebaut und erhitzt dabei direkt die Masse. Die erhitzte Spritzmasse kann dann in sehr kurzen Zykluszeiten verarbeitet werden.

In vorteilhafter Ausgestaltung der Erfindung besteht der Schneckenkörper bzw. die Innenauskleidung des Schneckenzylinders aus Oxidkeramik.

Alternativ kann vorteilhaft auch eine entsprechende isolierende Keramikbeschichtung erfolgen.

Um die Leitfähigkeit der Elektroden zu verbessern, können diese vorteilhaft verkupfert oder versilbert werden. Hierdurch wird eine höhere Dichte der Elektrodenoberfläche erzielt.

Die gleichmäßige Erwärmung der Spritzmasse durch Hochfrequenz mindert die Belastung des Materials durch den Kneteffekt und die Scherwirkung erheblich, was sich insbesondere bei der Beladung der Spritzmasse mit Fasern günstig auswirkt.

In der Zeichnung ist ein Ausführungsbeispiel der Erfindung dargestellt.

Es zeigen:

Fig. 1    den Längsschnitt einer Plastifiziereinrichtung mit einem Einfülltrichter,

Fig. 2    eine Schnecke und einen Schneckenzylinder entsprechend Fig. 1, jedoch mit einer eingezogenen Keramikbuchse.

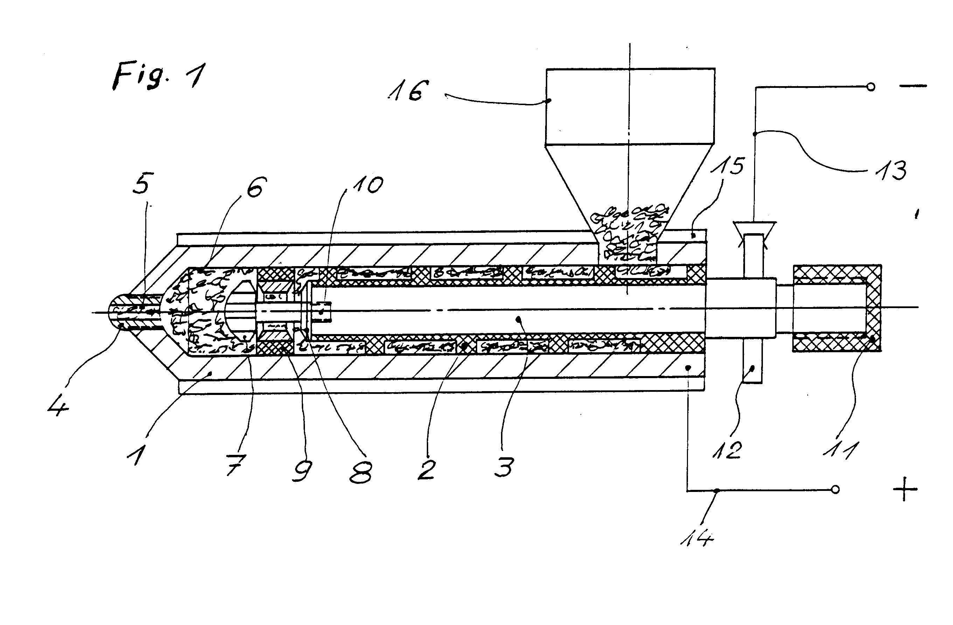

Gemäß Fig. 1 ist in einem Schneckenzylinder 1 ein Schneckenkörper 2 aus Oxidkeramik mit einer von einem nicht dargestellten Motor angetriebenen Schneckenwelle 3 fest verbunden. Am Schneckenzylinder ist eine Spritzdüse 4 mit einem Spritzkanal 5, der in ein Kopfstück 6 mündet, vorgesehen. Zwischen einem Rückstromsperrenkopf 7 und dem mit einem Dichtring 8 versehenen Schneckenkörper 2 ist ein im Schneckenzylinder 1 axial beweglicher Schiebering 9 angeordnet, der einerseits gegen den Dichtring 8 und andererseits gegen den Rückstromsperrenkopf 7 anliegt. Der Dichtring 8 ist mittels eines Gewindebolzens 10 fest mit dem Schneckenkörper 2 verbunden. Das hintere Ende der Schneckenwelle 3 ist mit einem isolierenden Mitnehmer 11 aus Keramik sowie einer Ringelektrode 12 für die Stromzuführung versehen. Die Stromzuführung erfolgt über eine Leitung 13 und die Ringelektrode 12 zu der Schneckenwelle 3 als innere Elektrode und über eine Leitung 14 zu dem Schneckenzylinder 1 als äußere Elektrode. Der Schneckenzylinder 1 ist mit einem ihn umhüllenden Keramikgewebe 15 als Wärmeisolierung versehen. Ein über der Plastifiziereinrichtung angeordneter Einfülltrichter 16 dient zur Versorgung der Schnecke mit Rohmaterial.

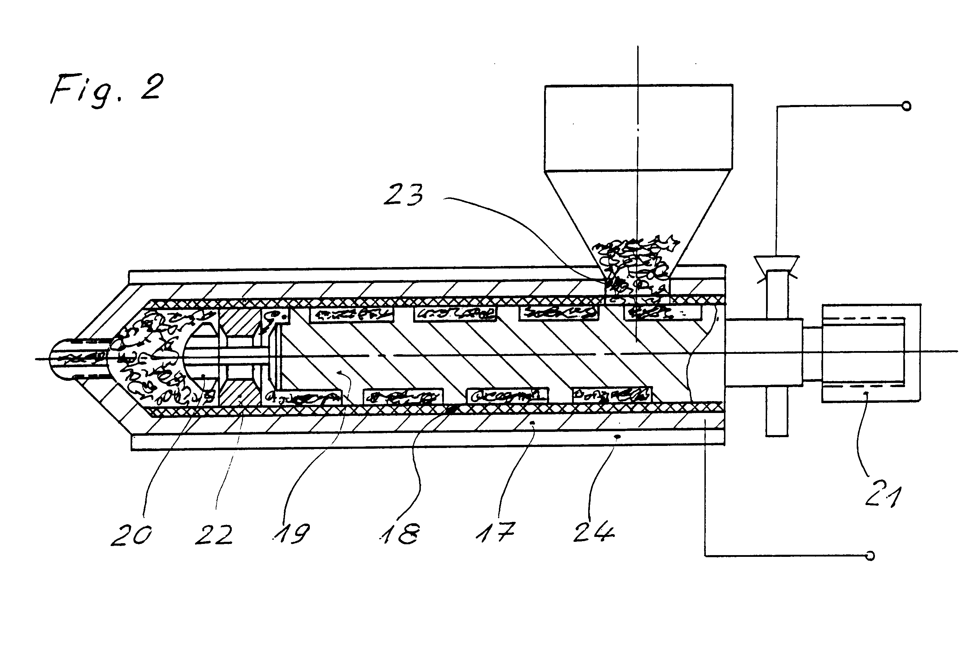

Gemäß Fig. 2 ist in einem Schneckenzylinder 17 eine Buchse 18 aus Oxidkeramik eingezogen. Die Buchse 18 umschließt eine Schnecke 19, die an ihrem vorderen Ende mit einem Rückstromsperrenkopf 20 und an ihrem hinteren Ende mit einem Mitnehmer 21 versehen ist. Zwischen der Schnecke 19 und dem Rückstromsperrenkopf 20 ist ein in der Buchse 18 geführter Schiebering 22 axial beweglich angeordnet. Der Schneckenzylinder 17 und die Buchse 18 sind mit einer Bohrung 23 für die Rohmaterialversorgung der Schnecke 19 versehen. Der Schneckenzylinder 17 ist mit einem Keramikgewebe 24 als Wärmeisolierung umgeben.

**Patentansprüche**

1.    Einrichtung zum Plastifizieren von thermoplastischen Kunststoffen, insbesondere für Extruder, im wesentlichen bestehend aus einem Schneckenzylinder und einer Schnecke, mit ei-

ner Heizeinrichtung, **dadurch gekennzeich-net**, daß die Beheizung der Plastifiziereinrichtung mittels Hochfrequenz erfolgt.

2. Einrichtung nach Anspruch 1, **dadurch gekennzeichnet**, daß der Schneckenkern als Innen- und der Schneckenzylinder (1,17) als Außenelektrode ausgebildet sind und zwischen den Elektroden ein Isolator angeordnet ist.

3. Einrichtung nach Anspruch 2, **dadurch gekennzeichnet**, daß die Schnecke aus einer Schneckenwelle (3) und einem Schneckenkörper (2) besteht, wobei die Schneckenwelle (3) als Innenelektrode, der Schneckenkörper (2) als Isolator und der Schneckenzylinder (1) als Außenelektrode ausgebildet sind.

4. Einrichtung nach Anspruch 3 **dadurch gekennzeichnet**, daß der Schneckenkörper (2) aus Oxidkeramik besteht.

5. Einrichtung nach Anspruch 3, **dadurch gekennzeichnet**, daß der Schneckenkörper (2) außen mit Oxidkeramik beschichtet ist.

6. Einrichtung nach Anspruch 2, **dadurch gekennzeichnet**, daß der Schneckenzylinder (17) mit einer Buchse (18) aus Oxidkeramik ausgekleidet ist.

7. Einrichtung nach Anspruch 2, **dadurch gekennzeichnet**, daß der Schneckenzylinder (17) innen mit Oxidkeramik beschichtet ist.

8. Einrichtung nach den Ansprüchen 1 bis 7, daß die Elektroden verkupfert oder versilbert sind.

Fig. 1

EP 0 469 466 A2

EP 0 469 466 A2

*Fig. 2*